# EUROPEAN PATENT APPLICATION

(11) **EP 4 428 184 A1**
(43) Date of publication of application: **11.09.2024**
(21) Application number: 22890038.7
(22) Date of filing: 04.11.2022
(51) Int. Cl.: C08J 11/16, B29B 17/00

(54) **METHOD FOR PROCESSING COMPOSITE MATERIAL AND METHOD FOR PRODUCING COMPOSITE MATERIAL**

(30) Priority: 05.11.2021 JP 2021181515
(71) Applicant: Asahi Kasei Kabushiki Kaisha, Tokyo 1000006 (JP)
(72) Inventor: OKADA Yuji, Tokyo 100-0006 (JP); YAMAMOTO Kazuya, Kitakyusyu-shi, Fukuoka 802-0985 (JP); NAGATA Yasuhisa, Kitakyusyu-shi, Fukuoka 802-0985 (JP)
(74) Representative: Hoffmann Eitle
(86) International application number: PCT/JP2022/041249
(87) International publication number: WO 2023/080218

(57) **Abstract**

An object is to provide a method of treating a composite material which enables the efficient recovery of the reinforcing material without causing degradation of the quality and without placing a burden on the environment. In order to achieve the above-mentioned object, the present disclosure is a method of treating a composite material made of a resin and a reinforcing material, the method comprising the steps of decomposing the resin and recovering the reinforcing material by immersing the composite material in a decomposition solution containing oxidatively active species derived from sulfuric acid as a raw material and performing heating, the method further comprising the step of supplying oxygen into the decomposition solution.

## Description

### TECHNICAL FIELD

The present disclosure relates to a method of treating a composite material, and more specifically, to a quick and efficient method of treating a composite material made of a resin and a reinforcing material, which enables the recovery of the reinforcing material from a composite material.

### BACKGROUND

Composite reinforcing materials (composite materials) are materials formed by compositing a resin that is the base material with a reinforcing material, such as carbon fibers, glass fibers, carbon fibers, glass fibers, metal fibers, organic high-strength fibers, an inorganic filler, a metal-based filler, carbon nanotubes, and cellulose nanofibers. Because of their high strength, such composite materials are widely used from small molded products such as fishing rods to large products such as ships. In particular, in recent years, since the use of composite materials (carbon fiber-reinforced plastics) containing carbon fibers as a reinforcing material can reduce the weight of products, carbon fiber-reinforced plastics have been used in structural materials for aircraft and other applications. In the future, carbon fiber-reinforced plastics hold great promise for improving the fuel efficiency of automobiles and the like.

Here, carbon fibers that are used as the reinforcing material for carbon fiber-reinforced plastics are currently produced in the tens of thousands of tons, and their demand is expected to grow to 100,000 to 150,000 tons by 2020, with further increases in production thereafter.

However, the production of carbon fibers requires enormous amounts of energy, and in view of environmental impact, it is desirable to recycle (particularly materially recycled) carbon fiber-reinforced plastics. Although recycling techniques for carbon fiber reinforced plastics are utilized for specific applications, no technique is practically implemented at present that enables material recycling for repeated use in automotive or aircraft components.

Examples of methods of separating a reinforcing material from a composite material, including a carbon fiber-reinforced plastic, made of a resin and the reinforcing material, and recovering the reinforcing material include, for example, the techniques disclosed in PTL 1 and PTL 2.

In the technique in PTL 1, a resin in a composite material is combusted and decomposed at a high temperature, and the recovered inorganic material is used as a raw material for a reinforcing material.

In the technique in PTL 2, the matrix of a carbon fiber composite material is decomposed through anodic oxidation by electrolytic treatment, and carbon fibers are recovered.

However, in the technique of PTL 1, the composite material is required to be heated to 300 to 1000 °C, which not only poses problems of the quality of the reinforcing material such as degradation, but also poses the problem of environmental impact due to heating at a high temperature.

In addition, the technique of PTL 2 uses the carbon fiber composite material as the anode (electrode), which limits the amount of carbon fiber composite material that can be treated at once. This makes it unsuitable as a method of treating carbon fiber composite materials on an industrial scale, and the electric current applied to the carbon fiber composite material may cause problems with the quality of the reinforcing material such as degradation.

Although quite a number of material recycling techniques have been proposed for composite materials made of a resin and a reinforcing material as the ones described above, there is still no standardized process for efficiently treating composite materials without placing a burden on the environment and without causing degradation of the quality of the reinforcing material, and landfill disposal and thermal recycling are currently employed.

### CITATION LIST

### Patent Literature

PTL 1: JP H7-33904 A
PTL 2: JP 2013-249386 A

### SUMMARY

### (Technical Problem)

Therefore, an object of the present disclosure is to provide a method for treating a composite material that enables the efficient recovery of the reinforcing material without causing degradation of the quality and without placing a burden on the environment.

### (Solution to Problem)

As a result of our study to solve the above problem, the present inventors paid attention to the decomposition reaction of a resin by oxidatively active species and discovered that the resin can be decomposed and the reinforcing material can be recovered without causing degradation of the quality by using a technique in which a composite material is immersed in a treatment solution containing oxidatively active species. In addition, we have discovered that the resin can be decomposed into water and carbon dioxide and the reinforcing material can be recovered easily, efficiently, and without causing degradation of the quality and without placing a burden on the environment by using a treatment solution containing oxidatively active species obtained through electrolysis of a sulfuric acid solution as the treatment solution. Note that the oxidatively active species mentioned above are those generated by adding hydrogen peroxide to sulfuric acid or through electrolysis of a sulfuric acid solution, and specifically include hydroxyl radicals, peroxosulfuric acid, peroxodisulfuric acid, and the like.

Note that the above-mentioned technique is a revolutionary process that enables efficient recycling of composite materials made of a resin and a reinforcing material based on the discovery of the decomposition reaction of the resin by oxidatively active species generated through electrolysis of a sulfuric acid solution and immersing the composite material in a treatment solution containing the oxidatively active species. Unlike landfill and thermal recycling, it can treat composite materials efficiently without placing a burden on the environment and without causing degradation of the quality of the reinforcing material. From the viewpoint of cost reduction, however, a process that can further accelerate the decomposition rate of the resin and recover the reinforcing material more efficiently has been demanded.

In view of the above, the present inventors have conducted further intensive research on a method of treating a composite material made of a resin and a reinforcing material, the method comprising the steps of decomposing the resin and recovering the reinforcing material by immersing the composite material in a decomposition solution containing oxidatively active species derived from sulfuric acid as a raw material and performing heating, and have discovered that the processing efficiency is greatly improved by further performing a step of supplying oxygen into the decomposition solution.

The present disclosure has been conceived of based on the above finding and the spirit thereof is as follows.
1. A method of treating a composite material made of a resin and a reinforcing material, the method comprising the steps of decomposing the resin and recovering the reinforcing material by immersing the composite material in a decomposition solution containing oxidatively active species derived from sulfuric acid as a raw material and performing heating,
   the method further comprising the step of supplying oxygen into the decomposition solution.
2. The method of treating a composite material according to the aforementioned 1, wherein the step of supplying oxygen into the decomposition solution comprises supplying oxygen during the immersion of the composite material and/or the heating.
3. The method of treating a composite material according to the aforementioned 1 or 2, wherein the decomposition solution is a solution of a sulfuric acid solution mixed with hydrogen peroxide.
4. The method of treating a composite material according to the aforementioned 1 or 2, wherein the decomposition solution is a solution obtained through electrolysis of a sulfuric acid solution.
5. The method of treating a composite material according to any one of the aforementioned 1 to 4, wherein the step of supplying oxygen into the decomposition solution comprises introducing an oxidative gas that is a single substance gas or a mixed gas of at least one selected from oxygen, ozone, nitrous oxide, nitrogen monoxide, and nitrogen dioxide; a mixed gas of the single substance gas or the mixed gas and an inert gas; an air only; or a mixed gas of the single substance gas or the mixed gas and the air, or adding a peroxide, a peroxy acid, perchloric acid, permanganic acid, nitric acid, and a salt thereof.
6. The method of treating a composite material according to any one of the aforementioned 2 to 5, wherein the oxidative gas introduced into the decomposition solution is a mixture of gases containing 15 volume% or more of the oxidative gas, and the mixture of gases at 0.01 NL/sec or more is introduced into the solution.
7. The method of treating a composite material according to any one of the aforementioned 2 to 6, wherein, in the step of supplying oxygen, the composite material is immersed in the decomposition solution and the resin component of the composite material is decomposed while the oxidative gas is introduced into the solution while the decomposition solution is heated and maintained to 100 °C to 200 °C, and the reinforcing material is recovered by filtering, washing, or drying after the decomposition.
8. The method of treating a composite material according to any of the aforementioned 1 or 7, wherein the reinforcing material is continuous fibers.
9. The method of treating a composite material according to the aforementioned 8, wherein the step of recovering the reinforcing material is a step of winding the reinforcing material onto a core material.
10. The method of treating a composite material according to any one of the aforementioned 1 to 9, wherein the reinforcing material comprises at least one selected from the group consisting of carbon fibers, glass fibers, and metal fibers.
11. A method of producing a composite material, the method comprising compositing the reinforcing material recovered by the method according to any one of the aforementioned 1 to 10 with a resin.

### (Advantageous Effect)

According to the present disclosure, it becomes possible to provide a method of treating a composite material that enables the efficient recovery of the reinforcing material without causing degradation of the quality and without placing a burden on the environment.

### DETAILED DESCRIPTION

An embodiment for embodying a method of treating a composite material of the present disclosure (hereinafter referred to as "the present embodiment") is described in detail below. Note that this disclosure is not limited to the following description, but may be selected from a variation within the scope of the subject thereof.

### <Step of decomposing resin and recovering composite material>

A method of treating a composite material made of a resin and a reinforcing material of the present embodiment includes the step of decomposing the resin and recovering the reinforcing material by immersing the composite material in a decomposition solution containing oxidatively active species derived from sulfuric acid as a raw material and performing heating (step of decomposing resin and recovering composite material).

### (Composite material)

A composite material in the present embodiment refers to a material of which strength is improved by compositing a resin (base material) with a reinforcing material that is a different type of material such as fibers or a filler. The method of compositing is not limited, and may be a method that utilizes interactions such as hydrogen bonding and intermolecular forces, and may be dispersion, adhesion, bonding, adsorption, carrying, placement, or the like. The composite material may further include a base material, a reinforcing material, or other additives.

Note that the composite material may be cut or pulverized in any form suitable for treatment and then treated with the treatment solution containing oxidatively active species.

The reinforcing material constituting the composite material is a material that is composited or dispersed into the resin that serves as the base material for the reinforced composite material. Examples of the reinforcing material include carbon fibers, glass fibers, metal fibers, organic high-strength fibers, an inorganic filler, carbon nanotubes, and cellulose nanofibers.

The reinforcing material can be either fibrous or particulate. Although the definition is not clear, generally, those with a large aspect ratio (length/width) (e.g., aspect ratio of, for example, 100 or more, preferably 200 or more) are called fibrous, and those with a small aspect ratio (length/width) (e.g., aspect ratio of, for example, less than 200, preferably less than 100) are called particulate.

Furthermore, fibrous reinforcing materials can be classified into continuous fibers with a length of several meters wound on a bobbin, for example, and short fibers with a fiber length of several millimeters to several centimeters. Continuous fibers are long fibers used in the form of unidirectional layers where all fibers are disposed parallel to each other, and may be knitted or woven.

In addition, quasi-isotropic, orthotropic, and anisotropic plates can be produced by stacking unidirectional layers in various directions. Therefore, if the reinforcing material can be recycled as continuous fibers, its use will expand greatly and contribute to the realization of a recycling-oriented society.

The carbon fibers are fibers made from fibers acrylic fibers or pitch (a byproduct of petroleum, coal, coal tar, etc.) by carbonizing it at a high temperature.

Glass fibers are fibers produced by melting and drawing glass into a fibrous state.

Metal fibers are fibers produced by processing metals, such as stainless steel, aluminum, iron, nickel, and copper, into thread-like forms through methods such as plastic working (e.g., rolling), melt spinning, CVD method, etc.

Organic high-strength fibers are fibers made of resins such as polyamide, polyester, acrylic resin, polyparaphenylene benzobisoxazole, and polyimide.

These fibers are processed into an intermediate substrate such as continuous fibers or non-woven fabric and composited with the base material.

Continuous fibers are long fibers used in the form of unidirectional layers where all fibers are disposed parallel to each other, and may be knitted or woven. In addition, quasi-isotropic, orthotropic, and anisotropic plates can be produced by stacking unidirectional layers in various directions.

Nonwoven fabrics are sheets of intertwined fibers without weaving. Nonwoven fabrics are produced by bonding or intertwining fibers to each other through thermal, mechanical, or chemical action.

Elements constituting inorganic fillers include, for example, elements in Groups 1 to 16 of the periodic table. This element is not limited, but elements belonging to Groups 2 to 14 of the periodic table are preferred. Specific examples thereof include Group 2 elements (e.g., Mg, Ca, and Ba), Group 3 elements (e.g., La, Ce, Eu, Ac, and Th), Group 4 elements (e.g., Ti, Zr, and Hf), Group 5 elements (e.g., V, Nb, and Ta), Group 6 elements (e.g., Cr, Mo, and W), Group 7 elements (e.g., Mn and Re), Group 8 elements (e.g., Fe, Ru, and Os), Group 9 elements (e.g., Co, Rh, and Ir), Group 10 elements (e.g., Ni, Pd, and Pt), Group 11 elements (e.g., Cu, Ag, and Au), Group 12 elements (e.g., Zn and Cd), Group 13 elements (e.g., Al, Ga, and In), and Group 14 elements (e.g., Si, Ge, Sn, and Pb).

Inorganic compounds containing these elements include oxides (including complex oxides), halides (fluorides, chlorides, bromides, and iodides), oxoacid salts (e.g., nitrates, sulfates, phosphates, borates, perchlorates, and carbonates), and compounds formed from negative elements and the aforementioned elements such as carbon monoxide, carbon dioxide, and carbon disulfide, as well as salts such as hydrocyanic acid, cyanides, cyanates, thiocyanates, and carbides, for example.

One inorganic filler may contain one or more of the aforementioned elements. A plurality of elements may be uniformly or unevenly distributed in the particles, or the surfaces of particles of a compound of one element may be coated with a compound of another element. These inorganic fillers may be used alone or in a combination of two or more.

Among these, preferred inorganic fillers are not limited, but include, for example, at least one element selected from the group consisting of silica, zirconia, titanium, zinc, iron, copper, chromium, cadmium, carbon, tungsten, antimony, nickel, and platinum.

Carbon nanotubes are single or multilayered coaxial tubes of six-membered ring networks of carbon (graphene sheets). They are one allotrope of carbon and are sometimes classified as one type of fullerene.

Cellulose nanofiber refers to thin cellulose fibers from wood, processed to have a width of about 15 nanometers.

In the present embodiment, the content of the reinforcing material in the composite material is preferably 10 to 80 mass% per 100 mass% of the reinforced composite material. The lower limit is preferably 15 mass% or more, 20 mass% or more, and the upper limit is preferably 75 mass% or less, 70 mass% or less.

The resin constituting the composite material refers to the resin used as the matrix of the composite material, which may be a thermoplastic resin or a thermosetting resin. The resin of the composite material may also be a mixture of these or a resin containing a subcomponent of the resin component, such as crystallized products, heat-treated products, oriented products, plasticizers, and modifiers.

The thermoplastic resin refers to a resin that softens when heated to its glass transition temperature or melting point so that it can be molded into the desired shape. Generally, thermoplastic resins are often difficult to machine through processes such as cutting and grinding, and injection molding is widely used where the resin is heated until softened, then injected into a mold and cooled to solidify into the final product. Examples include super engineering plastics such as polyetheretherketone and polyethersulfone, polyethylene, polypropylene, polystyrene, ABS resins, vinyl chloride resins, methyl methacrylate resins, nylon, fluororesin, polycarbonate, and polyester resins, for example.

The thermosetting resin refers to a resin that, when heated, causes polymerization to form a polymer network structure that hardens and cannot be restored to its original state. In use, resins with a relatively low molecular weight so as to have fluidity are shaped into a predetermined shape and then reacted and cured by heating or other means. There are types of resins that are used as adhesives or putties by mixing Component A (base) with Component B (hardener). These are thermosetting resins such as epoxy resins, where a polymerization reaction occurs upon mixing. Thermosetting resins are hard and resistant to heat and solvents. Examples include phenolic resins, epoxy resins, bismaleimide resins, polyimide resins, unsaturated polyester resins, vinyl ester resins, and polyurethane.

In the present embodiment, the content of the resin in the composite material is preferably 20 to 90 parts by mass, per 100 parts by mass of the reinforcing material. The lower limit is preferably 25 parts by mass or more, 30 parts by mass or more, and the upper limit is preferably 85 parts by mass or less, 80 parts by mass or less.

Note that the composite material may contain flame retardants, heat stabilizers, antioxidants, light absorbers, mold release agents, lubricants, various stabilizers, antistatic agents, dyes, and various reactants as other additives.

In the present embodiment, the content of other additives in the composite material may be, for example, 0.01 mass% or less, 80 mass% or less, per 100 mass% of the reinforced composite material.

### (Decomposition solution)

In the present embodiment, a decomposition solution containing oxidatively active species derived from sulfuric acid as a raw material is used.

Here, the oxidatively active species contained in the decomposition solution are derived from sulfuric acid as the raw material, and can be specifically obtained by (a) electrolyzing a sulfuric acid solution or (b) mixing hydrogen peroxide with the sulfuric acid.

Alternatively, acids other than sulfuric acid, such as hydrochloric acid and nitric acid, may also be mixed.

The sulfuric acid used as the raw material for the oxidatively active species is a sulfuric acid solution containing sulfuric acid (H₂SO₄) and water (H₂O). Here, the concentration of sulfuric acid in the sulfuric acid solution is preferably 30 to 95 weight%, more preferably 50 to 80 weight%. This is because if the concentration of sulfuric acid is less than 30 weight%, the necessary amount of oxidatively active species for decomposing the base material of the reinforced composite material cannot be obtained and the decomposition of the base material takes a long time.

In the electrolysis of the (a) sulfuric acid solution, platinum electrodes or carbon electrodes can be used, but for electrolysis of a sulfuric acid solution with a high concentration, so-called diamond electrodes having a thin diamond coating provided on the surfaces of a metal plate can be used in view of durability. As an electrolysis apparatus for sulfuric acid solution, a diaphragm-type electrolysis cell with diamond electrodes is preferably used.

When diamond electrodes are used, the electrical conditions for the electrolysis may include a current density of 0.01 to 10 A/cm² and a voltage of 0.1 to 100 V. These conditions may be appropriately changed depending on factors such as the type of electrodes, the concentration of sulfuric acid in the sulfuric acid solution, and the volume of the sulfuric acid solution.

Note that the electrolysis is required to be performed in a closed system, and it is preferable that the electrolysis is performed in a closed sulfuric acid solution circulation system in which a predetermined amount of a sulfuric acid solution is circulated. The circulation method can be either by using a pump or the like to circulate the liquid in a direction parallel to the electrode surfaces at a flow rate of 50 mL/min or more, or by natural convection in which the liquid is circulated according to the flow of gas generated by the electrolysis.

The processing time for electrolysis is appropriately adjusted depending on the volume of a sulfuric acid solution, the concentration of sulfuric acid, the flow rate of the sulfuric acid solution, the current-carrying conditions, or the like, and the processing time is preferably 0.5 to 10 hours per 1 liter of a sulfuric acid solution for efficient generation of oxidatively active species.

In the case of the sulfuric acid electrolysis method in which a sulfuric acid solution is used for electrolysis as the cathode and anode solutions, sulfuric acid in different concentrations may be used for the cathode and the anode. In particular, in the present disclosure, since the sulfuric acid solution containing oxidatively active species obtained through electrolysis of a sulfuric acid solution with a high concentration is effective in promoting the decomposition of the base material of the reinforced composite material, it is preferable to increase the concentration of sulfuric acid on the anode side and decrease the concentration of sulfuric acid on the cathode side for prolonging the life of the electrodes.

Electricity can be supplied from a variety of conceivable apparatuses etc. as a power source for electrolysis of the sulfuric acid solution, and it is preferable to use electricity generated from so-called renewable energy sources such as solar cells. The hydrogen (generated from the cathode) and oxygen (generated from the anode) produced by electrolysis can also be collected and converted to electricity or heat.

Furthermore, when hydrogen peroxide is mixed with the sulfuric acid solution, it is preferable to add hydrogen peroxide at appropriate intervals because hydrogen peroxide is consumed.

When hydrogen peroxide is mixed with the sulfuric acid solution, it is preferable to mix the hydrogen peroxide in an amount of 0.1 to 1.0 to the sulfuric acid solution, relative to 1 of sulfuric acid.

The method of supplying the resulting decomposition solution containing the oxidatively active species to the treatment tank used for the decomposition of the resin of the composite material can be either a method of continuously supplying the solution from the electrolysis apparatus to the treatment tank by means of a pump (continuous method), or a method of circulating a sulfuric acid solution in a closed system so that the treatment solution is collected from the system after electrolysis and the treatment solution is supplied to the treatment tank (batch method). This apparatus may be used in combination with an apparatus that can heat or cool or pressurize the collected treatment solution.

Additionally, since the decomposition solution after treating the reinforced composite material can be reused repeatedly, it can be collected, adjusted in concentration, and reused as a sulfuric acid solution to generate oxidatively active species again. This further reduces the environmental impact.

The decomposition solution containing the oxidatively active species is preferably heated to enhance the decomposition of the resin in the composite material. Although the heating temperature of the decomposition solution is dependent on the boiling point of the decomposition solution, it is preferable to heat the solution to a temperature of 100 °C or higher, more preferably 100 to 200 °C, for efficient decomposition of the resin in the composite material. The heating temperature may be the boiling point of the sulfuric acid solution or lower and the solution is heated under atmospheric pressure or in inert gas. Note that the treatment solution may be heated under pressurized or under reduced pressure.

When the decomposition solution is used to decompose the resin in the composite material, the weight ratio of the composite material to the treatment solution is preferably set to 0.001 to 0.1. This promotes complete decomposition of the resin in the composite material, and ensures recovery of the reinforcing material such as reinforcing fibers.

Note that the time for immersing the composite material in the decomposition solution is not particularly limited and may be set according to the concentration of the decomposition solution and the amount of the resin.

Additionally, when the reinforcing material constituting the composite material is fibrous, it is preferable to align the treated reinforcing material in one direction while maintaining the length thereof, or to orient it in a pseudo-isotropic manner, or to arrange it randomly, to enhance the quality of a composite material made of the treated reinforcing material.

Examples of the method of aligning the treated reinforcing material in one direction include a method of passing the treated reinforcing material through a nozzle with a certain shape in water or air, thereby aligning the direction of the reinforcing material and bundling it together. Examples of the method of orienting fibers in a pseudo-isotropic manner include a method of using a programmable robot or other means to orient the fibers in one direction and immobilizing the fibers with a resin or other means. Examples of the method of randomly arranging the fibers include the method of using a random mat production machine.

### <Step of supplying oxygen>

In addition to the step of decomposing the resin and recovering the composite material described above, the present embodiment further includes the step of supplying oxygen into the decomposition solution.

Having the step of supplying oxygen into the decomposition solution in addition to the conventional step accelerates the decomposition rate of the resin constituting the composite material, thus enabling the recovery of high-quality reinforcing material more efficiently than with conventional techniques, without placing a burden on the environment.

The step of supplying oxygen into the decomposition solution is not limited, but it is preferable to supply oxygen during immersion and/or heating of the composite material because the decomposition efficiency can be further enhanced.

Examples of the oxidative gas include oxygen, ozone, nitrous oxide, nitrogen monoxide, nitrogen dioxide, fluorine, chlorine, chlorine dioxide, nitrogen trifluoride, chlorine trifluoride, silicon tetrachloride, and oxygen difluoride, for example. Among these, the oxidative gas is preferably a single substance gas or a mixed gas of at least one selected from oxygen, ozone, nitrous oxide, nitrogen monoxide, and nitrogen dioxide in view of safety. The single substance gas or the mixed gas may also be mixtures with inert gases. Furthermore, in view of the cost, it is preferable to use the air in the atmosphere as the oxidative gas, and a mixed gas of the above-mentioned single substance gas or mixed gas and the air may be used during the step of supplying oxygen into the decomposition solution.

The method of introducing the oxidative gas into the decomposition solution is not limited, and includes, for example, the method of bubbling the oxidative gas into the reaction system. The oxidative gas may be introduced through a single inlet or multiple inlets, and the inlet(s) may be made of a plastic, metal, glass, or other material that has an excellent resistance to sulfuric acid.

Various means may also be used for introducing the oxidative gas, such as by introduction into the reaction system or direct connection to the reaction vessel. A pump that supplies the gas, an air header that stores the gas supplied from the pump, and the like may be used to introduce the oxidative gas, and it is more preferable to introduce the gas by microbubbling.

In addition, the oxidative gas introduced into the decomposition solution is a mixture of gases containing at least 15 volume% of the oxidative gas, and it is preferable to introduce the mixture of gases into the decomposition solution at 0.01 NL/second or more. This can further accelerate the decomposition rate of the resin. From a similar viewpoint, it is preferable to introduce the mixture of gases at 0.01 NL/second or more into the system (the decomposition solution) from the start of treatment. More preferably, the mixture of gases is introduced into the system from the start of treatment within the range of 0.01 NL/second to 1 NL/second.

In addition, for efficiently introducing the oxidative gas into the decomposition solution, the oxidative gas may be mechanically microbubbled and introduced.

Furthermore, the method of supplying oxygen other than the method of introducing the oxidative gas may include adding, for example, a peroxide, such as hydrogen peroxide, benzoyl peroxide, and peracetic acid, a peroxy acid, perchloric acid, permanganic acid, nitric acid, and a salt thereof.

The peroxide, peroxy acid, perchloric acid, permanganic acid, nitric acid, and the salt thereof added to the decomposition solution is preferably added to the decomposition solution at 0.01 mL/second or more. This can further accelerate the decomposition rate of the resin. From a similar viewpoint, it is preferable to introduce a compound at 0.01 mL/second or more into the system (the decomposition solution) from the start of treatment. More preferably, the compound is introduced into the system from the start of treatment within the range of 0.01 mL/second to 1 mL/second.

Furthermore, as mentioned above, it is also effective to mechanically agitate the entire system in the reaction system in which the composite material is immersed to decompose the matrix resin of the composite material while the decomposition solution is heated to and maintained at 100 °C to 200 °C.

### <Recycling of composite material (production of composite material)>

Note that the reinforcing material recovered by the method of treating the composite material described above can be recycled to regenerate a composite material.

For example, it is possible to regenerate (manufacture) a reinforced composite material by washing and drying the reinforcing material from which the resin has been removed to recycle the reinforcing material, and compositing the recycled reinforcing material with the base metal.

### <Winding step>

The reinforcing material of reinforced composite materials can be recovered as continuous fibers for recycling as follows: a portion of the base material of the composite material is decomposed, and the portion of the reinforcing material is extracted and attached to a core. Subsequently, while decomposing the base material, the reinforcing material is wound up.

In this step, the reinforcing material may be washed with water or dried. The reinforcing material may be washed with water or dried before it is wound, or washed with water or dried after it is wound. Between the above decomposition step and the above winding step, a step of washing and/or drying the above reinforcing material may be performed.

### EXAMPLES

The following provides a description of the present disclosure through specific examples and comparative examples. However, the present disclosure is not limited to the following examples.

### (Preparation of decomposition solution containing oxidatively active species)

An electrolysis was conducted in a diaphragm-type electrolytic cell using diamond electrodes as the electrodes while cooling the electrodes with water. A water solution of sulfuric acid with a concentration of 30 to 70 weight% was circulated using a pump (diaphragm-type liquid pump SIMDOS FEM 1.02KT manufactured by KNF Corporation), to thereby produce 500 mL or more of a decomposition solution containing oxidatively active species. The electrolysis was performed by primarily supplying a constant current of 0.1 to 5.0 A/cm² under circulation for 10 to 500 minutes. The total concentration of oxidatively active species in the electrolyzed water solution of sulfuric acid was determined by reacting the oxidatively active species with potassium iodide (reagent manufactured by Wako Pure Chemical Industries, Ltd.) to liberate iodine and titrating the total concentration of iodine with a sodium thiosulfate standard solution (reagent manufactured by Wako Pure Chemical Industries, Ltd.).

### [Examples and Comparative Examples]

In Examples 1 to 8 and Comparative Examples 1 to 4, pressure tanks made of CFRP were used as composite materials. The pressure tanks made of CFRP were produced as follows. A reinforcing material was wound around a core material using a filament winder while an epoxy resin as the base material was applied on the reinforcing material. The resin was then cured at 150 °C for 30 minutes to obtain pressure tanks. In Examples 10 to 13 and Comparative Examples 7 to 9, carbon fiber-reinforced plastic plates (CFRP, medium-temperature curable epoxy resin-based prepreg manufactured by Toho Tenax Co., Ltd.) were used as composite materials, which were immersed in the following decomposition solution to decompose the resin and recover the reinforcing material (carbon fibers).

In Example 1, a solution of 98% concentrated sulfuric acid and 30% hydrogen peroxide water, which were mixed at a weight ratio of 3:1, was used as the decomposition solution.

In Examples 2 and 10, a solution of 64% concentrated sulfuric acid and 30% hydrogen peroxide water, which were mixed at a weight ratio of 3:1, was used as the decomposition solution.

In Examples 3 to 9 and 11 to 13, sulfuric acid of a given concentration was used as the decomposition solution, which was treated using diamond electrodes for a given time under the electrolysis conditions with constant current summarized in Table 1.

In Examples 1 to 8 and 10 to 12, the gas was introduced by bubbling the air directly through piping into the decomposition bath during the decomposition step.

In Examples 8 and 13, hydrogen peroxide water was introduced dropwise into the decomposition bath during the decomposition step.

In Comparative Example 1, a solution of 98% concentrated sulfuric acid and 30% hydrogen peroxide water, which were mixed at a weight ratio of 3:1, was used as the decomposition solution.

In Comparative Examples 2 and 7, a solution of 64% concentrated sulfuric acid and 30% hydrogen peroxide water, which were mixed at a weight ratio of 3:1, was used as the decomposition solution.

In Comparative Examples 3 to 6 and 8 to 9, sulfuric acid of a given concentration was used as the decomposition solution, which was treated using diamond electrodes for a given time under the electrolysis conditions with constant current summarized in Table 2.

In Comparative Example 6, the gas was introduced by bubbling the air directly through piping into the decomposition bath during the decomposition step.

After treatment of the composite material in each of the examples and each of the comparative examples, the reinforcing material (carbon fibers) was recovered from the treatment solution and observed. The resin component of the composite material was not present. Hence, the resin constituting the composite material is considered to be completely decomposed.

In addition, the reinforcing materials (carbon fibers) recovered from the decomposition solution were tested using a universal tensile tester (Shimadzu Corporation, EZ Test series, Shimadzu compact table-top tester EZ Test-5N) at a tensile speed of 1.5 mm/minute and 23 °C. The ratio of the strength of the recovered carbon fibers to the inherent strength of the reinforcing material (carbon fibers) (strength ratio of recycled fiber, i.e., the strength of the reinforcing material recovered from the decomposition solution divided by the inherent strength of the reinforcing material) was then calculated. As a result, the ratios obtained by dividing the strength of the reinforcing material recovered from the decomposition solution by the inherent strength of the reinforcing material ranged from 0.9 to 1.2, confirming that degradation of the strength caused by the recycling process was small.

In addition, the concentration of sulfuric acid in the decomposition solution, the total concentration of oxidatively active species in the decomposition solution, the weight ratio of the composite material (CFRP) to the decomposition solution used in the decomposition treatment, the type and amount of oxidative gas introduced, the heating temperature of the decomposition solution, and the time required until complete decomposition of the resin in each of the examples and each of the comparative examples are summarized in Tables 1 and 2.

**[Table 1]**

| | | Concentration of sulfuric acid in decomposition solution (%) | Electrolysis current density (A/cm²) | Processing time of electrolysis (hrs) | Total concentration of oxiditively active species (mol/L) | Weight ratio of composite material / decompositio n solution | Type of gas (volume ratio) | Amount of gas introduced (NL/s) | Type of peroxide | Amount of peroxide introduced (mL/s) | Temperature of decompositio n solution (° C) | Average time until complete decompositio n (minutes) | Strength ratio of recycled fiber | Type of fiber |
|---|---|---|---|---|---|---|---|---|---|---|---|---|---|---|
| | 1 | 74 | - | - | 0.5-0.7 | 0.01 | Air | 0.02 | - | - | 150 | 70 | 0.9 | Continuous fiber |
| | 2 | 48 | - | - | 0.3-0.5 | 0.01 | Air | 0.02 | - | - | 150 | 100 | 0.9 | Continuous fiber |
| | 3 | 74 | 1-2 | 2-3 | 0.8-1.0 | 0.01 | Air | 0.02 | - | - | 150 | 50 | 1 | Continuous fiber |
| | 4 | 65 | 1 3 | 2 3 | 0.5-0.7 | 0.01 | Air | 0.01 | - | - | 150 | 60 | 1.1 | Continuous fiber |
| | 5 | 50 | 3-5 | 2-3 | 1.0-1.2 | 0.01 | Air | 0.02 | - | - | 150 | 50 | 1 | Continuous fiber |
| | 6 | 70 | 1-2 | 2-3 | 0.5-0.7 | 0.02 | Oxygen / air (1/4) | 0.01 | - | - | 200 | 40 | 1 | Continuous fiber |
| Examples | 7 | 50 | 3-5 | 2-4 | 1.0-1.2 | 0.03 | Oxygen / nitrogen (1/1) | 0.05 | - | - | 150 | 90 | 1.1 | Continuous fiber |
| | 8 | 30 | 5-7 | 2-4 | 1.2-1.4 | 1 | Oxygen | 0.05 | - | - | 150 | 100 | 1 | Continuous fiber |
| | 9 | 50 | 3-5 | 2-3 | 1.0-1.2 | 0.01 | Not used | - | 30% hydrogen peroxide solution | 0.01 | 150 | 50 | 1 | Continuous fiber |
| | 10 | 48 | - | - | 0.3-0.5 | 0.01 | Air | 0.02 | - | - | 150 | 100 | 0.9 | Short fiber |
| | 11 | 50 | 3-5 | 2-3 | 1.0-1.2 | 0.01 | Air | 0.02 | - | - | 150 | 50 | 1 | Short fiber |
| | 12 | 50 | 3-5 | 2-4 | 1.0-1.2 | 0.03 | Oxygen / nitrogen (1/1) | 005 | - | - | 150 | 90 | 1.1 | Short fiber |
| | 13 | 50 | 3-5 | 2-3 | 1.0-1.2 | 0.01 | Not used | - | 30% hydrogen peroxide solution | 0.01 | 150 | 50 | 1 | Short fiber |

**[Table 2]**

| | | Concentration of sulfuric acid in decomposition solution (%) | Electrolysis current density (A/cm²) | Processing time of electrolysis (hrs) | Total concentration of oxiditively active species (mol/L) | Weight ratio of composite material / decompositio n solution | Type of gas (volume ratio) | Amount of gas introduced (NL/s) | Type of peroxide | Amount of peroxide introduced (mL/s) | Temperature of decompositio n solution (° C) | Average time until complete decompositio n (minutes) | Strength ratio of recycled fiber | Type of fiber |
|---|---|---|---|---|---|---|---|---|---|---|---|---|---|---|
| Comparative Example | 1 | 74 | - | - | 0.5-0.7 | 001 | Not used | - | - | - | 150 | 220 | 0.7 | Continuous fiber |
| | 2 | 48 | - | - | 0.3-0.5 | 0.01 | Not used | - | - | - | 150 | 280 | 0.7 | Continuous fiber |
| | 3 | 50 | 1-2 | 2-3 | 0.8-1.0 | 0.01 | Not used | - | - | - | 150 | 180 | 0.8 | Continuous fiber |
| | 4 | 65 | 1-3 | 2-3 | 0.5-0.7 | 0.01 | Not used | - | - | - | 150 | 180 | 0.8 | Continuous fiber |
| | 5 | 50 | 3-5 | 2-3 | 1.0-1.2 | 0.01 | Not used | - | - | - | 150 | 180 | 0.8 | Continuous fiber |
| | 6 | 70 | 1-2 | 2-3 | 0.5-0.7 | 0.02 | Nitrogen | 0.01 | - | - | 200 | 120 | 0.8 | Continuous fiber |
| | 7 | 48 | | | 0.3-0.5 | 0.01 | Not used | | - | - | 150 | 280 | 0.7 | Short fiber |
| | 8 | 50 | 1-2 | 2-3 | 0.8-1.0 | 0.01 | Not used | | - | - | 150 | 180 | 0.8 | Short fiber |
| | 9 | 50 | 3-5 | 2-3 | 1.0-1.2 | 001 | Not used | - | - | - | 150 | 180 | 0.8 | Short fiber |

The results in Tables 1 and 2 indicate that the time until complete decomposition of the resin was shorter by a factor of several times in each of the examples than in each of the examples, indicating that the processing efficiency was greatly improved by supplying oxygen into the decomposition solution.

### INDUSTRIAL APPLICABILITY

According to the present disclosure, it becomes possible to provide a method of treating a composite material that enables the efficient recovery of the reinforcing material without causing degradation of the quality and without placing a burden on the environment.

## Claims

1. A method of treating a composite material made of a resin and a reinforcing material, the method comprising the steps of decomposing the resin and recovering the reinforcing material by immersing the composite material in a decomposition solution containing oxidatively active species derived from sulfuric acid as a raw material and performing heating,
the method further comprising the step of supplying oxygen into the decomposition solution.

2. The method of treating a composite material according to claim 1, wherein the step of supplying oxygen into the decomposition solution comprises supplying oxygen during the immersion of the composite material and/or the heating.

3. The method of treating a composite material according to claim 1 or 2, wherein the decomposition solution is a solution of a sulfuric acid solution mixed with hydrogen peroxide.

4. The method of treating a composite material according to claim 1 or 2, wherein the decomposition solution is a solution obtained through electrolysis of a sulfuric acid solution.

5. The method of treating a composite material according to claim 1 or 2, wherein the step of supplying oxygen into the decomposition solution comprises introducing an oxidative gas that is a single substance gas or a mixed gas of at least one selected from oxygen, ozone, nitrous oxide, nitrogen monoxide, and nitrogen dioxide; a mixed gas of the single substance gas or the mixed gas and an inert gas; an air only; or a mixed gas of the single substance gas or the mixed gas and the air, or adding a peroxide, a peroxy acid, perchloric acid, permanganic acid, nitric acid, and a salt thereof.

6. The method of treating a composite material according to claim 2, wherein an oxidative gas introduced into the decomposition solution is a mixture of gases containing 15 volume% or more of the oxidative gas, and the mixture of gases at 0.01 NL/sec or more is introduced into the solution.

7. The method of treating a composite material according to claim 2, wherein, in the step of supplying oxygen, the composite material is immersed in the decomposition solution and the resin component of the composite material is decomposed while the oxidative gas is introduced into the solution while the decomposition solution is heated and maintained to 100 °C to 200 °C, and the reinforcing material is recovered by filtering, washing, or drying after the decomposition.

8. The method of treating a composite material according to claim 1 or 2, wherein the reinforcing material is continuous fibers.

9. The method of treating a composite material according to claim 8, wherein the step of recovering the reinforcing material is a step of winding the reinforcing material onto a core material.

10. The method of treating a composite material according to claim 1 or 2, wherein the reinforcing material comprises at least one selected from the group consisting of carbon fibers, glass fibers, and metal fibers.

11. A method of producing a composite material, the method comprising compositing the reinforcing material recovered by the method according to claim 1 or 2 with a resin.
